# EUROPÄISCHE PATENTSCHRIFT

(11) **EP 1 034 035 B1**
(45) Veröffentlichungstag und Bekanntmachung des Hinweises auf die Patenterteilung: **04.06.2003**
(21) Anmeldenummer: 98949006.5
(22) Anmeldetag: 05.10.1998
(51) Int. Cl.: B01J 27/26, C08G 65/10, B01J 31/06

(54) **KRISTALLINE DOPPELMETALLCYANID-KATALYSATOREN FÜR DIE HERSTELLUNG VON POLYETHERPOLYOLEN**
CRYSTALLINE DOUBLE METAL CYANIDE CATALYSTS FOR PRODUCING POLYETHER POLYOLS
CATALYSEURS CRISTALLINS A BASE DE CYANURE DE METAUX DOUBLES POUR LA PRODUCTION DE POLYETHER POLYOLS

(30) Priorität: 13.10.1997 DE 19745120; 23.12.1997 DE 19757574; 10.03.1998 DE 19810269; 31.07.1998 DE 19834573; 16.09.1998 DE 19842382
(43) Veröffentlichungstag der Anmeldung: 13.09.2000
(73) Patentinhaber: BAYER AG, 51368 Leverkusen (DE)
(72) Erfinder: HOFMANN, Jörg, D-47829 Krefeld (DE); GUPTA, Pramod, D-50181 Bedburg (DE); KUMPF, Robert-Joseph, D-40489 Düsseldorf (DE); OOMS, Pieter, D-47800 Krefeld (DE); SCHÄFER, Walter, D-42799 Leichlingen (DE); SCHNEIDER, Michael, D-51061 Köln (DE)
(86) Internationale Anmeldenummer: EP9806312
(87) Internationale Veröffentlichungsnummer: WO99019063

(56) Entgegenhaltungen:
- EP-A- 0 700 949
- US-A- 5 627 122
- US-A- 5 637 673
- US-A- 5 641 858

## Beschreibung

Die Erfindung betrifft hochaktive, substantiell kristalline Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe beispielsweise US 3 404 109, US 3 829 505, US 3 941 849 und US 5 158 922). Der Einsatz dieser DMC-Katalysatoren für die Herstellung von Polyetherpolyolen bewirkt insbesondere eine Reduzierung des Anteils an monofünktionellen Polyethem mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wässrige Lösung eines Metallsalzes mit der wässrigen Lösung eines Metallcyanidsalzes in Gegenwart eines niedermolekularen organischen Komplexliganden, z.B. eines Ethers, umsetzt. In einer typischen Katalysatorpräparation werden beispielsweise wässrige Lösungen von Zinkchlorid (im Überschuß) und Kaliumhexacyanocobaltat gemischt und anschließend Dimethoxyethan (Glyme) zur gebildeten Suspension gegeben. Nach Filtration und Waschen des Katalysators mit wässriger Glyme-Lösung wird ein aktiver Katalysator der allgemeinen Formel

Zn₃[Co(CN)₆]₂ •x ZnCl₂ • yH₂O • z Glyme

erhalten (siehe z.B. EP 700 949).

Aus EP 700 949, WO 97/40086 und WO 98/16310 sind verbesserte DMC-Katalysatoren bekannt, die neben der Doppelmetallcyanidverbindung und dem organischen Komplexliganden zusätzlich einen Polyether (EP 700 949, WO 97/40086) oder ein fünktionalisiertes Polymer bzw. ein davon abgeleitetes wasserlösliches Metallsalz (WO 98/16310) enthalten.

Die verbesserten DMC-Katalysatoren besitzen außerordentlich hohe Aktivität und ermöglichen die Herstellung von Polyetherpolyolen bei sehr geringen Katalysatorkonzentrationen (20-25 ppm; siehe Tabelle 1 in WO 98/16310).

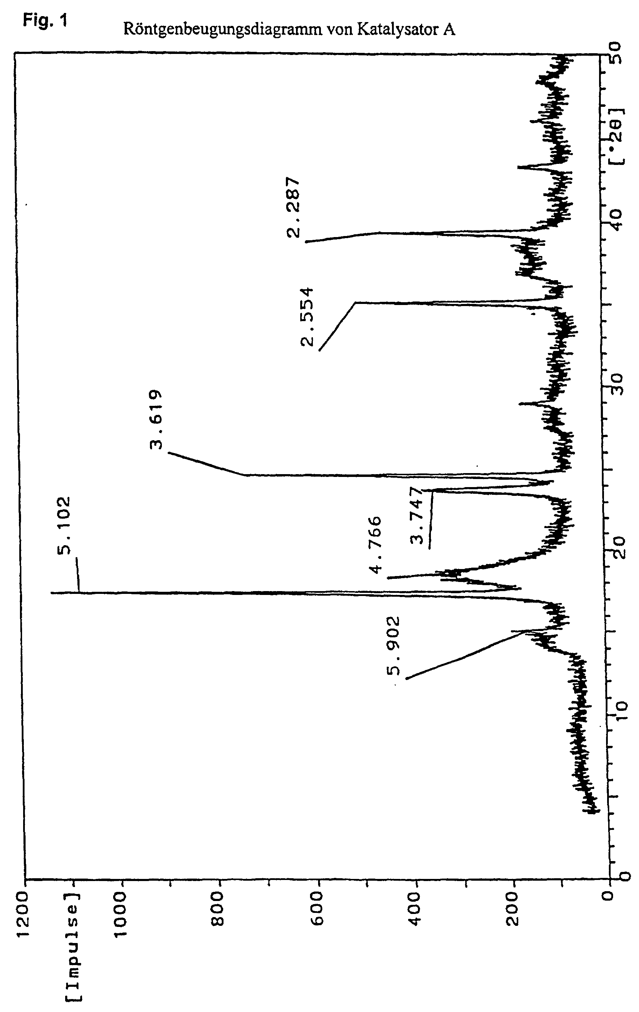

Die in EP 700 949, WO 97/40086 und WO 98/16310 beschriebenen verbesserten DMC-Katalysatoren sind überwiegend nicht-kristallin (d.h. amorph). Entscheidend für die sehr hohe Aktivität dieser DMC-Katalysatoren ist, daß bei der Präparation die Bildung hochkristalliner Formen des Katalysators unterdrückt wird (siehe Seite II, Zeilen 20-28 in WO 98/16310). Infolgedessen ist das Röntgenbeugungsdiagramm der Katalysatorpulver gekennzeichnet durch das Fehlen scharfer, für hochkristallines Zinkhexacyanocobaltat charakteristischer Linien bei etwa 5,07, 3,56, 2,54 und 2,28 Å (siehe Seite 4, Zeilen 25-26 in EP 700 949, Seite 8, Zeilen 5-8 in WO 97/40086 und Seite 8, Zeilen 26-29 in WO 98/16310). Die Röntgenbeugungsdiagramme dieser Katalysatoren zeigen dagegen einen einzelnen, relativ scharfen Peak bei etwa 3,7-3,8 Å und zwei weitere, breitere Signale bei etwa 4,7-4,9 Å bzw. 5,8-6,2 Å (siehe Seite 4, Zeilen 22-24 und Tabelle 2 in EP 700 949, Seite 8, Zeilen 1-5 in WO 97/40086 und Seite 10, Zeilen 7-16 und Fig.1 in WO 98/16310).

Aufgabe der vorliegenden Erfindung war es, weiter verbesserte DMC-Katalysatoren für die Polyaddition von Alkylenoxiden an entsprechende Starterverbindungen zur Verfügung zu stellen, die eine im Hinblick auf die bislang bekannten Katalysatortypen deutlich erhöhte Katalysatoraktivität aufweisen. Dies führt durch Verkürzung der Reaktionszeiten der Polyetherpolyol-Herstellung zu einer verbesserten Wirtschaftlichkeit des Prozesses. Idealerweise kann durch die erhöhte Aktivität der Katalysator dann in so geringen Konzentrationen (20 ppm oder weniger) eingesetzt werden, daß eine ansonsten sehr aufwendige Katalysatorabtrennung nicht mehr notwendig ist, und das Produkt direkt für Polyurethan-Anwendungen verwendet werden kann.

Überraschend wurde jetzt gefunden, daß DMC-Katalysatoren, die eine Doppelmetallcyanid-Verbindung, einen organischen Komplexliganden und ein funktionalisiertes Polymer enthalten, bei der Polyetherpolyol-Herstellung stark erhöhte Aktivität besitzen, wenn der DMC-Katalysator substantiell kristallin ist.

Gegeristand der vorliegenden Erfindung ist ein hochaktiver Doppelmetall-cyanid (DMC)-Katalysator gemäß Anspruch 1.

In dem erfindungsgemäßen Katalysator können gegebenenfalls d) Wasser, vorzugsweise 1 bis 10 Gew.-% und/oder e) eines oder mehrere wasserlösliche Metallsalze, vorzugsweise 5 bis 25 Gew.-%, der Formel (I) M(X)ₙ aus der Herstellung der Doppelmetallcyanidverbindungen a) enthalten sein.

In Formel (I) wird M ausgewählt aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X sind gleich oder verschieden, vorzugsweise gleich und ein Anion, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Die in den erfindungsgemäßen Katalysatoren enthaltenen Doppelmetallcyanid-Verbindungen a) sind die Reaktionsprodukte wasserlöslicher Metallsalze und wasserlöslicher Metallcyanidsalze.

Zur Herstellung von Doppelmetallcyanid-Verbindungen a) geeignete wasserlösliche Metallsalze besitzen bevorzugt die allgemeine Formel (I) M(X)ₙ, wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X sind gleich oder verschieden, vorzugsweise gleich und ein Anion, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)-bromid, Eisen(II)chlorid, Cobalt(II)chlorid, Cobalt(II)thiocyanat, Nickel(II)chlorid und Nickel(II)nitrat. Es können auch Mischungen verschiedener wasserlöslicher Metallsalze eingesetzt werden.

Zur Herstellung von Doppelmetallcyanid-Verbindungen a) geeignete wasserlösliche Metallcyanidsalze besitzen bevorzugt die allgemeine Formel (II) (Y)ₐ M'(CN)_{b} (A)_{c}, wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Y sind gleich oder verschieden, vorzugsweise gleich, und ein Alkalimetallion oder ein Erdalkalimetallion. A sind gleich oder verschieden, vorzugsweise gleich, und ein Anion, ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a, als auch b und c sind ganzzahlig, wobei die Werte für a, b und c so gewählt sind, daß die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen a), die in den erfindungsgemäßen Katalysatoren enthalten sind, sind Verbindungen der allgemeinen Formel (III)

Mₓ[M'ₓ,(CN)_{y}]_{z},

worin M wie in Formel (I) und M' wie in Formel (II) definiert ist, und x, x', y und z sind ganzzahlig und so gewählt, daß die Elektronenneutralität der Doppelmetallcyanidverbindung gegeben ist.
Vorzugsweise ist
x = 3, x^{'}= 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die in den erfindungsgemäßen DMC-Katalysatoren enthaltenen organischen Komplexliganden b) sind im Prinzip bekannt und ausführlich im Stand der Technik beschrieben (siehe z.B. US 5 158 922 insbesondere Spalte 6, Zeilen 9 - 65, US 3 404 109, US 3 829 505, US 3 941 849, EP 700 949, WO 97/40086 und WO 98/16310). Bevorzugte organische Komplexliganden sind wasserlösliche, organische Verbindungen mit Heteroatomen, wie Sauerstoff, Stickstoff, Phosphor oder Schwefel, die mit der Doppelmetallcyanid-Verbindung a) Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie Ethanol, Isopropanol, n-Butanol, iso-Butanol, sek.-Butanol und tert.-Butanol. Besonders bevorzugt ist tert.-Butanol.

Der organische Komplexligand wird entweder während der Katalysatorpräparation zugegeben oder unmittelbar nach der Ausfällung der Doppelmetallcyanidverbindung a). Gewöhnlich wird der organische Komplexligand im Überschuß eingesetzt.

Die erfindungsgemäßen DMC-Katalysatoren enthalten die Doppelmetallcyanid-Verbindungen a) im allgemeinen in Mengen von 20 bis 90 Gew.-%, bevorzugt 25 bis 80 Gew.-%, bezogen auf die Menge des fertigen Katalysators, und die organischen Komplexliganden b) im allgemeinen in Mengen von 0,5 bis 30, bevorzugt 1 bis 25 Gew.-%, bezogen auf die Menge des fertigen Katalysators.

Die erfindungsgemäßen DMC-Katalysatoren enthalten üblicherweise 5 bis 80 Gew.-%, bevorzugt 7 bis 60 Gew.-%, bezogen auf die Menge des fertigen Katalysators, an funktionalisiertem Polymer.

Unter funktionalisierten Polymeren werden Polymere verstanden, die eine oder mehrere funktionelle Gruppen mit Heteroatomen wie Sauerstoff, Stickstoff, Schwefel, Phosphor oder Halogen innerhalb des Polymers enthalten.

Für die Herstellung der erfindungsgemäßen Katalysatoren geeignete funktionalsierte Polymere sind im Prinzip bekannt und ausführlich beschrieben in EP 700 949, WO 97/40086, WO 98/16310, der deutschen Patentanmeldungen 197 45 120.9, 19757574.9, 198 10 269.0, 198 34 573.9 und 198 42 382.9. Geeignete funktionalisierte Polymere sind z.B. Polyether, Polyester, Polycarbonate, Polyalkylenglykolsorbitanester, Polyalkylenglykolglycidylether, Polyacrylamid, Poly(acrylamidco-acrylsäure), Polyacrylsäure, Poly(acrylsäure-so-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale.

Bevorzugt eingesetzte funktionalisierte Polymere sind Polyether, Polyester, Polycarbonate, Polyalkylenglykolsorbitanester und Polyalkylenglykolglycidylether.

Bevorzugt eingesetzte Polyether sind Polyetherpolyole mit Hydroxyfunktionalitäten von 1 bis 8, besonders bevorzugt von 1 bis 3, und zahlenmittleren Molekulargewichten zwischen 150 und 10⁷, besonders bevorzugt zwischen 200 und 5·10⁴. Sie werden in der Regel durch Ringöffnungspolymerisation von Epoxiden in Gegenwart entsprechender aktive Wasserstoffatome aufweisende Starterverbindungen unter basischer, saurer oder koordinativer Katalyse (z.B. DMC-Katalyse) erhalten. Geeignete Polyetherpolyole sind z.B. Poly(oxypropylen)polyole, Poly(oxyethylen)-polyole, EO-getippte Poly(oxypropylen)polyole, gemischte EO/PO-Polyole, Butylenoxid-Polymere, Butylenoxidcopolymere mit Ethylenoxid und/oder Propylenoxid und Poly(oxytetramethylen)glykole.

Bevorzugt eingesetzte Polyester sind Hydroxy-Endgruppen aufweisende lineare und teilverzweigte Polyester mit mittleren Molmassen unterhalb 10000, die in der deutschen Patentanmeldung 197 45 120.9 genauer beschrieben sind. Besonders bevorzugt eingesetzt werden Polyester mit mittleren Molmassen von 400 bis 6000 und OH-Zahlen von 28 bis 300 mg KOH/g, die für die Herstellung von Polyurethanen geeignet sind. Geeignete Polyester sind z.B. Poly(ethylenglykol-adipat), Poly(diethylenglykol-adipat), Poly(dipropylenglykol-adipat), mit Trimethylolpropan verzweigtes Poly(diethylenglykol-adipat) oder Poly(tetramethylenglykol-adipat).

Bevorzugt eingesetzte Polycarbonate sind Hydroxy-Endgruppen aufweisende aliphatische Polycarbonate mit mittleren Molmassen unterhalb 12000, die in der deutschen Patentanmeldung 197 57 574.9 genauer beschrieben sind. Besonders bevorzugt eingesetzt werden aliphatische Polycarbonat-Diole mit mittleren Molmassen von 400 bis 6000. Geeignete Polycarbonat-Diole sind z.B. Poly(1,6-hexandiol)-carbonat, Poly(diethylenglykol)carbonat, Poly(dipropylenglykol)carbonat, Poly(triethylenglykol)carbonat, Poly(1,4-bishydroxymethylcyclohexan)carbonat, Poly(1,4-butandiol)carbonat oder Poly(tripropylenglykol)carbonat.

Bevorzugt eingesetzte Polyalkylenglykolsorbitanester sind Polyethylenglykolsorbitanester (Polysorbate), die der deutschen Patentanmeldung 198 42 382.9 genauer beschrieben sind. Besonders bevorzugt sind Polyethylenglykolsorbitanmono-, di- und triester von Fettsäuren mit 6 bis 18 C-Atomen und 2 bis 40 Mol Ethylenoxid.

Bevorzugt eingesetzte Polyalkylenglykolglycidylether sind Mono- und Diglycidylether von Polypropylenglykol und Polyethylenglykol, die in der deutschen Patentanmeldung 198 34 573.9 genauer beschrieben sind.

Es können auch beliebige Mischungen der vorgenannten fünktionalisierten Polymere eingesetzt werden.

Die Analyse der Katalysatorzusammensetzung erfolgt üblicherweise mittels Elementaranalyse, Thermogravimetrie oder extraktiver Entfernung des Anteils an funktionalisiertem Polymer mit anschließender gravimetrischer Entfernung.

Die Analyse der Kristallinität der erfindungsgemäßen, substantiell kristallinen Katalysatoren erfolgt durch Pulverröntgendiffraktometrie. Substantiell kristallin bedeutet, daß in den Röntgenbeugungsdiagrammen der Katalysatorpulver scharfe, für hochkristalline Doppelmetallcyanid-Verbindungen charakteristische Linien auftreten, wobei eine dieser Linien die intensitätsstärkste Linie im Röntgenbeugungsdiagramm darstellt.

Bei erfindungsgemäßen DMC-Katalysatoren, die Zinkhexacyanocobaltat(III) als Doppelmetallcyanid-Verbindung enthalten, ist das Röntgenbeugungsdiagramm der Katalysatorpulver gekennzeichnet durch das Auftreten scharfer, für hochkristallines Zinkhexacyanocobaltat charakteristischer Linien bei d-Abständen von etwa 5,05 bis 5,15 Å, 3,55 bis 3,65 Å, 2,50 bis 2,60 Å und 2,25 bis 2,30 Å. Charakteristisch für diese DMC-Katalysatoren ist weiterhin, daß als intensitätsstärkstes Signal in den Röntgenbeugungsdiagrammen stets die Linie bei etwa 5,05-5,15 Å auftritt (siehe z.B. Abbildung 1 (Röntgenbeugungsdiagramm von Katalysator A aus Beispiel 1): Linien bei 5,10, 3,62, 2,55 und 2,29 Å).Daneben können in den Beugungsdiagrammen auch die für amorphe DMC-Katalysatoren charakteristischen Linien bei etwa 3,7-3,8 Å (relativ scharf) und die beiden breiten Signale bei etwa 4,7-4,9 Å bzw. 5,8-6,2 Å auftreten, allerdings mit geringerer Intensität.

Bevorzugt sind erfindungsgemäße Katalysatoren, enthaltend
a) Zinkhexacyanocobaltat (III),
b) tert.-Butanol und
ein fünktionalisiertes Polymere.

Die Herstellung der erfindungsgemäßen DMC-Katalysatoren erfolgt üblicherweise in wäßriger Lösung durch Umsetzung von α) Metallsalzen, insbesondere der Formel (I) mit Metallcyanidsalzen insbesondere der Formel (II) β) von organischen Komplexliganden b), die von dem fünktionalisierten Polymer verschieden sind und γ) dem funktionalisierten Polymer.

Bevorzugt werden dabei zunächst die wäßrigen Lösungen des Metallsalzes (z.B. Zinkchlorid, eingesetzt im stöchiometrischen Überschuß (mindestens 50 Mol-% bezogen auf das Metallcyanidsalz)) und des Metallcyanidsalzes (z.B. Kaliumhexacyanocobaltat) in Gegenwart des organischen Komplexliganden b) (z.B. tert.-Butanol) umgesetzt, wobei sich eine Suspension bildet, die die Doppelmetallcyanid-Verbindung a) (z.B. Zinkhexacyanocobaltat), Wasser d), überschüssiges Metallsalz e), und den organischen Komplexliganden b) enthält.

Der organische Komplexligand b) kann dabei in der wäßrigen Lösung des Metallsalzes und/oder des Metallcyanidsalzes vorhanden sein, oder er wird der nach Ausfällung der Doppelmetallcyanid-Verbindung a) erhaltenen Suspension unmittelbar zugegeben. Es hat sich als vorteilhaft erwiesen, die wäßrigen Lösungen und den organischen Komplexliganden b) unter starkem Rühren zu vermischen. Die gebildete Suspension wird üblicherweise anschließend n.it dem fünktionalisierten Polymer c) behandelt. Das funktionalisierte Polymer c) wird dabei bevorzugt in einer Mischung mit Wasser und organischem Komplexliganden b) eingesetzt.

Anschließend erfolgt die Isolierung des Katalysators aus der Suspension durch bekannte Techniken, wie Zentrifügation oder Filtration. In einer bevorzugten Ausführungsvariante wird der isolierte Katalysator anschließend mit einer wäßrigen Lösung des organischen Komplexliganden b) gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden.

Bevorzugt liegt die Menge des organischen Komplexliganden b) in der wäßrigen Waschlösung zwischen 40 und 80 Gew.-%, bezogen auf die Gesamtlösung. Weiterhin ist es vorteilhaft, der wäßrigen Waschlösung etwas fünktionalisiertes Polymer, bevorzugt im Bereich zwischen 0,5 und 5 Gew.-%, bezogen auf die Gesamtlösung, zuzufügen.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nicht wäßrige Lösungen zu verwenden, z.B. eine Mischung aus organischem Komplexliganden und funktionalisiertem Polymer.

Der gewaschene Katalysator wird anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

Ein weiterer Gegenstand ist die Verwendung der erfindungsgemäßen, substantiell kristallinen DMC-Katalysatoren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder aber auch statistisch oder blockweise mit 2 oder 3 unterschiedlichen monomeren Epoxiden erfolgen. Näheres ist "Ullmanns Encyclopädie der industriellen Chemie", englisch-sprachige Ausgabe, 1992, Band A21, Seiten 670 - 671, zu entnehmen.

Als aktive Wasserstoffatome aufweisende Starterverbindungen werden Verbindungen mit Molekulargewichten von 18 bis 2000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke und Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit Molekulargewichten von 200 bis 2000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, daß unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,0025 Gew.-%, bezogen auf die Menge des herzustellenden Polyetherpolyols.

Die Molekulargewichte der nach dem erfindungsgemäßen Verfahren hergestellten Polyetherpolyole liegen im Bereich von 500 bis 100000 g/mol, bevorzugt im Bereich von 1000 bis 50000 g/mol, besonders bevorzugt im Bereich von 2000 bis 20000 g/mol.

Die Polyaddition kann kontinuierlich oder diskontinuierlich, z.B. in einem Batchoder im Semibatchverfahren durchgeführt werden.

Die erfindungsgemäßen Katalysatoren können wegen ihrer deutlich erhöhten Aktivität in sehr niedrigen Konzentrationen eingesetzt werden (20 ppm und weniger, bezogen auf die Menge des herzustellenden Polyetherpolyols). Werden die in Gegenwart der erfindungsgemäßen Katalysatoren hergestellten Polyetherpolyole zur Herstellung von Polyurethanen verwendet (Kunststoffhandbuch, Bd. 7, Polyurethane, 3. Aufl., 1993, S. 25-32 und 57-67), kann auf eine Entfernung des Katalysators aus dem Polyetherpolyol verzichtet werden, ohne daß die Produktqualitäten des erhaltenen Polyurethans nachteilig beeinflußt werden.

Die nachfolgenden Beispiele erläutern die Erfindung, haben jedoch keinerlei limitierenden Charakter.

### Beispiele

### Katalysatorpräparation

### Beispiel 1

### Herstellung eines substantiell kristallinen DMC-Katalysators mit tert.-Butanol als organischem Komplexliganden und Einsatz eines Polyesters (Katalysator A).

Zu einer Lösung aus 4 g (12 mMol) Kaliumhexacyanocobaltat in 70 ml destilliertem Wasser gibt man unter starkem Rühren (24000 U/min) eine Lösung aus 12,5 g (91,5 mMol) Zinkchlorid in 20 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24000 U/min). Dann wird eine Mischung aus 1 g eines durch Trimethylolpropan schwach verzweigten Polyesters aus Adipinsäure und Diethylenglykol mit mittlerer Molmasse 2300 (OH-Zahl = 50 mg KOH/g), 1 g tert.-Butanol und 100 g destilliertem Wasser zugegeben und 3 min gerührt (1000 U/min). Der Feststoff wird durch eine Filtration isoliert, dann 10 min mit einer Mischung aus 70 g tert.-Butanol, 30 g destilliertem Wasser und 1 g des obigen Polyesters gerührt (10000 U/min) und erneut filtriert. Abschließend wird noch einmal 10 min mit einer Mischung aus 100 g tert.-Butanol und 0,5 g des obigen Polyesters gerührt (10000 U/min). Nach Filtration wird der Katalysator bei 50°C und Normaldruck bis zur Gewichtskonstanz getrocknet.
Ausbeute an getrocknetem, pulverförmigem Katalysator: 3,85 g
Elementaranalyse und Thermogravimetrische Analyse:
Cobalt = 12,2 %, Zink = 25,7 %, tert.-Butanol = 7,1 %, Polyester = 12,3 %

Das Röntgenbeugungsdiagramm des Katalysators A ist in Abbildung 1 gezeigt.

Die im Röntgenbeugungsdiagramm des Katalysators A auftretenden Signale sind in Tabelle 1 zusammengefaßt.

### Beispiel 2

### Herstellung eines substantiell kristallinen DMC-Katalysators mit tert.-Butanol als organischem Komplexliganden und Einsatz eines Polycarbonats (Katalysator B).

Zu einer Lösung aus 4 g (12 mMol) Kaliumhexacyanocobaltat in 70 ml destilliertem Wasser gibt man unter starkem Rühren (24000 U/min) eine Lösung aus 12,5 g (91,5 mMol) Zinkchlorid in 20 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24000 U/min). Dann wird eine Mischung aus 1 g eines Dipropylenglykol-Polycarbonats mit mittlerer Molmasse 1968 (bestimmt durch Messung der OH-Zahl), 1 g tert.-Butanol und 100 g destilliertem Wasser zugegeben und 3 min gerührt (1000 U/min). Der Feststoff wird durch eine Filtration isoliert, dann 10 min mit einer Mischung aus 70 g tert.-Butanol, 30 g destilliertem Wasser und 1 g des obigen Polycarbonats gerührt (10000 U/min) und erneut filtriert. Abschließend wird noch einmal 10 min mit einer Mischung aus 100 g tert.-Butanol und 0,5 g des obigen Polycarbonats gerührt (10000 U/min). Nach Filtration wird der Katalysator bei 50°C und Normaldruck bis zur Gewichtskonstanz getrocknet.
Ausbeute an getrocknetem, pulverförmigem Katalysator: 5,33 g
Elementaranalyse und Thermogravimetrische Analyse:
Cobalt = 10,8 %, Zink = 24,4 %, tert.-Butanol = 20,2 %, Polycarbonat = 15,0 %

Die im Röntgenbeugungsdiagramm des Katalysators B auftretenden Signale sind in Tabelle 1 zusammengefaßt.

### Beispiel 3

### Herstellung eines substantiell kristallinen DMC-Katalysators mit tert.-Butanol als organischem Komplexliganden und Einsatz eines Polyethers (Katalysator C).

Zu einer Lösung aus 4 g (12 mMol) Kaliumhexacyanocobaltat in 70 ml destilliertem Wasser gibt man unter starkem Rühren (24000 U/min) eine Lösung aus 12,5 g (91,5 mMol) Zinkchlorid in 20 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24000 U/min). Dann wird eine Mischung aus 1 g eines Poly(oxyethylen)diols mit mittlerer Molmasse 2000, 1 g tert.-Butanol und 100 g destilliertem Wasser zugegeben und 3 min gerührt (1000 U/min). Der Feststoff wird durch eine Filtration isoliert, dann 10 min mit einer Mischung aus 70 g tert.-Butanol, 30 g destilliertem Wasser und 1 g des obigen Poly-(oxyethylen)diols gerührt (10000 U/min) und erneut filtriert. Abschließend wird noch einmal 10 min mit einer Mischung aus 100 g tert.-Butanol und 0,5 g des obigen Poly(oxyethylen)diols gerührt (10000 U/min). Nach Filtration wird der Katalysator bei 50°C und Normaldruck bis zur Gewichtskonstanz getrocknet.
Ausbeute an getrocknetem, pulverförmigem Katalysator: 5,97 g
Elementaranalyse, Thermogravimetrische Analyse und Extraktion:
Cobalt = 10,0 %, Zink = 22,0 %, tert.-Butanol = 4,2 %, Polyether = 41,1 %

Die im Röntgenbeugungsdiagramm des Katalysators C auftretenden Signale sind in Tabelle 1 zusammengefaßt.

### Beispiel 4

### Herstellung eines substantiell kristallinen DMC-Katalysators mit tert.-Butanol als organischem Komplexliganden und Einsatz eines Polyalkylenglykolglycidylethers (Katalysator D).

Zu einer Lösung aus 4 g (12 mMol) Kaliumhexacyanocobaltat in 70 ml destilliertem Wasser gibt man unter starkem Rühren (24000 U/min) eine Lösung aus 12,5 g (91,5 mMol) Zinkchlorid in 20 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24000 U/min). Dann wird eine Mischung aus 1 g eines Polypropylenglykol-bis-(2,3-epoxypropylethers) mit zahlenmittlerem Molekulargewicht 640 (Firma Aldrich), 1 g tert.-Butanol und 100 g destilliertem Wasser zugegeben und 3 min gerührt (1000 U/min). Der Feststoff wird durch eine Filtration isoliert, dann 10 min mit einer Mischung aus 70 g tert.-Butanol, 30 g destilliertem Wasser und 1 g des obigen Polypropylenglykol-bis-(2,3-epoxypropylethers) gerührt (10000 U/min) und erneut filtriert. Abschließend wird noch einmal 10 min mit einer Mischung aus 100 g tert.-Butanol und 0,5 g des obigen Polypropylenglykol-bis-(2,3-epoxypropylethers) gerührt (10000 U/min). Nach Filtration wird der Katalysator bei 50°C und Normaldruck bis zur Gewichtskonstanz getrocknet.
Ausbeute an getrocknetem, pulverförmigem Katalysator: 8,70 g
Elementaranalyse, Thermogravimetrische Analyse und Extraktion:
Cobalt = 8,7 %, Zink = 20,2 %, tert.-Butanol = 4,2 %, Polyalkylenglykolglycidylether-Ligand = 30,5 %

Die im Röntgenbeugungsdiagramm des Katalysators D auftretenden Signale sind in Tabelle 1 zusammengefaßt.

### Herstellung von Polyetherpolyolen

### Allgemeine Durchführung

In einem 500 ml Druckreaktor werden 50 g Polypropylenglykol-Starter (Molekulargewicht = 1000 g/mol) und 3 mg Katalysator (15 ppm, bezogen auf die Menge des herzustellenden Polyetherpolyols) unter Schutzgas (Argon) vorgelegt und unter Rühren auf 105°C aufgeheizt. Anschließend wird Propylenoxid (ca. 5 g) auf einmal zudosiert, bis der Gesamtdruck auf 2,5 bar angestiegen ist. Weiteres Propylenoxid wird erst dann wieder zudosiert, wenn ein beschleunigter Druckabfall im Reaktor beobachtet wird. Dieser beschleunigte Druckabfall zeigt an, daß der Katalysator aktiviert ist (Ende der Induktionszeit). Anschließend wird das restliche Propylenoxid (145 g) kontinuierlich bei einem konstanten Gesamtdruck von 2,5 bar zudosiert. Nach vollständiger Propylenoxid-Dosierung und 2 Stunden Nachreaktionszeit bei 105°C werden flüchtige Anteile bei 90°C (1 mbar) abdestilliert und anschließend auf Raumtemperatur abgekühlt.

Die erhaltenen Polyetherpolyole wurden durch Ermittlung der OH-Zahlen, der Doppelbindungsgehalte und der Viskositäten charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Zeit-Umsatz-Kurve wurde die Induktionszeit bestimmt. Die für die Katalysatoraktivität maßgeblichen Propoxylierungszeiten entsprechen dem Zeitraum zwischen Katalysatoraktivierung (Ende der Induktionszeit) und dem Ende der Propylenoxid-Dosierung.

### Beispiel 5

| Herstellung von Polyetherpolyol mit Katalysator | A (15 ppm) |
|---|---|
| Induktionszeit : 1 | 80 min |
| Propoxylierungszeit: | 155 min |
| Gesamtreaktionszeit: | 335 min |
| | |
| Polyetherpolyol : OH-Zahl (mg KOH/g): | 27,4 |
| Doppelbindungsgehalt (mMol/kg): | 5 |
| Viskosität 25°C (mPas): | 1084 |

### Beispiel 6

| Herstellung von Polyetherpolyol mit Katalysator | B (15 ppm) |
|---|---|
| Induktionszeit | 120 min |
| Propoxylierungszeit | 190 min |
| Gesamtreaktionszeit | 310 min |
| Polyetherpolyol: OH-Zahl (mg KOH/g) | 29,6 |
| Doppelbindungsgehalt (mMol/kg) | 6 |
| Viskosität 25°C (mPas) | 901 |

### Beispiel 7

| Herstellung von Polyetherpolyol mit Katalysator | C (15 ppm) |
|---|---|
| Induktionszeit | 150 min |
| Propoxylierungszeit | 245 min |
| Gesamtreaktionszeit | 395 min |
| Polyetherpolyol: OH-Zahl (mg KOH/g) | 29,8 |
| Doppelbindungsgehalt (mMol/kg) | 11 |
| Viskosität 25°C (mPas) | 935 |

### Beispiel 8

| Herstellung von Polyetherpolyol mit Katalysator | D (15 ppm) |
|---|---|
| Induktionszeit | 295 min |
| Propoxylierungszeit | 160 min |
| Gesamtreaktionszeit | 455 min |
| Polyetherpolyol: OH-Zahl (mg KOH/g) | 30,0 |
| Doppelbindungsgehalt (mMol/kg) | 7 |
| Viskosität 25°C (mPas) | 897 |

Beispiele 5-8 zeigen, daß die erfindungsgemäßen, substantiell kristallinen DMC-Katalysatoren aufgrund ihrer außerordentlich hohen Aktivität bei der Polyetherpolyol-Herstellung in so geringen Konzentrationen eingesetzt werden können, daß auf eine Abtrennung der Katalysatoren aus dem Polyol verzichtet werden kann.

Aus Tabelle 1 geht hervor, daß in den Röntgenbeugungsdiagrammen der erfindungsgemäßen Katalysatoren scharfe, für hochkristallines Zinkhexacyanocobaltat charakteristische Linien bei d-Abständen von 5,05-5,15 Å, 3,55-3,65 Å, 2,50-2,60 Å und 2,25-2,30 Å auftreten, und daß als intensitätsstärkstes Signal stets das Signal bei 5,05-S,15 Å auftritt.

Abbildung 1 zeigt zur Illustration das Röntgenbeugungsdiagramm des Katalysators A aus Beispiel 1: Es treten scharfe, für hochkristallines Zinkhexacyanocobaltat charakteristische Linien bei d-Abständen von 5,10, 3,62, 2,55 und 2,29 Å auf. Intensitätsstärkstes Signal ist die Linie bei 5,10 Å.

**Tabelle 1:**

| Charakterisierung der DMC-Katalysatoren durch Röntgenbeugung | | | | | | | |
|---|---|---|---|---|---|---|---|
| | Röntgenbeugungsdiagramm d-Abstände / [Å] | | | | | | |
| | 5,6-6,2 (br) | 5,05-5,15 (s) | 4,6-4,9 (br) | 3,7-3,8 | 3,55-3,65 (s) | 2,5-2,6 (s) | 2,25-2,3 (s) |
| 1 (Kat. A) | + | +^{1'} | + | + | + | + | + |
| 2 (Kat. B) | + | +^{1'} | + | + | + | + | + |
| 3 (Kat: C) | + | +^{1'} | + | + | + | + | + |
| 4(Kat.D) | + | + ^{1'} | + | + | + | + | + |
| (br) = breite Bande, (s) = scharfes Signal | | | | | | | |

| | | | | | | | |
|---|---|---|---|---|---|---|---|
| 1' intensitätsstärkstes Signal | | | | | | | |

## Patentansprüche

1. Doppelmetallcyanid (DMC)-Katalysator, enthaltend
a) eine oder mehrere Doppelmetallcyanid-Verbindungen,
b) einen oder mehrere von c) verschiedene organische Komplexliganden, und
c) ein oder mehrere funkäönaüsierte Polymere,
**dadurch gekennzeichnet, daß** im Röntgenbeugungsdiagramm des KataIysatorpulvers schärfe, für hochkristalline Doppelmetallcyanid-Verbindungen charakteristische Linien auftreten, erhältlich durch ein Verfahren enthaltend die Schritte:
i) Umsetzung in wäßriger Lösung von
(α) Metallsalzen mit Metallcyanidsalzen,
(β) organischen Komplexliganden, die vom funktionalisierten Polymer verschieden sind, und
(γ) fünktionalisiertem Polymer,
ii) Isolierung, Waschen und Trocknen des in Schritt i) erhaltenen Katalysators.

2. DMC-Katalysator nach Anspruch 1, zusätzlich enthaltend d) Wasser und/oder e) wasserlösliches Metallsalz.

3. DMC-Katalysator nach Anspruch 1 oder 2, worin die Doppelmetallcyanid-Verbindung Zinkhexacyanocobaltat(III) ist.

4. DMC-Katalysator nach einem der Ansprüche 1 bis 3, worin der organische Komplexligand tert-Butanol ist.

5. DMC-Katalysator nach einem der Ansprüche 1 bis 4, worin der Katalysator 5 bis 80 Gew.-%, vorzugsweise 7 bis 60 Gew.-% eines fünktionalisierten Polymers enthält.

6. DMC-Katalysator nach einem der Ansprüche 1 bis 5, enthaltend
a) Zinkhexacyanocobaltat(III),
b) tert-Butanol, und
c) ein funktionalisiertes Polymer.

7. DMC-Katalysator nach Anspruch 6, **dadurch gekennzeichnet, daß** im Röntgenbeugungsdiagramm für hochkristallines Zinkhexacyanocobaltat charakteristische Linien bei d-Abständen von etwa 5,05-5,15 Å, 3,55-3,65 Å, 2,50-2,60 Å und 2,25-2,30 Å auftreten.

8. DMC-Katalysator nach Anspruch 6, **dadurch gekennzeichnet, daß** im Röntgenbeugungsdiagramm als intensitätsstärkstes Signal der Peak bei einem d-Abstand von etwa 5,05-5,15 Å auftritt.

9. DMC-Katalysator nach einem der Ansprüchen 1 bis 8, **dadurch gekennzeichnet, daß** das funktionalisierte Polymer ausgewählt ist aus der Gruppe: Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-so-mäleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly-(acrylsäure-co-styrol), Oxazolinpolymere, Polyalkylenimine, Maleinsäureund Maleinsäureanhydridcopolymere, Hydroxyethylcellulose und Polyacetale.

10. DMC-Katalysator nach Anspruch 9, **dadurch gekennzeichnet, daß** das funktionalisierte Polymer ein Polyether ist.

11. DMC-Katalysator nach Anspruch 10, **dadurch gekennzeichnet, daß** der Polyether ein Polyetherpolyol mit Hydroxyrunktionalität von 1 bis 3 and zahlenmittlerem Molekulargewicht zwischen 200 und 5·10⁴ ist.

12. DMC-Katalysator nach Anspruch 9, **dadurch gekennzeichnet, daß** das funktionalisierte Polymer ein Polycarbonat ist.

13. DMC-Katalysator nach Anspruch 12, **dadurch gekennzeichnet, daß** das funktionalisierte Polymer ein aliphatisches Polycarbonat-Diol mit mittlerer Molmasse von 400 bis 6000 ist.

14. DMC-Katalysator nach Anspruch 9, **dadurch gekennzeichnet, daß** das funktionalisierte Polymer ein Polyester ist.

15. DMC-Katalysator nach Anspruch 14, **dadurch gekennzeichnet, daß** das funktionalisierte Polymer ein Polyester mit mittlerer Molmasse von 400 bis 6000 und OH-Zahl von 28 bis 300 mg KOH/g ist.

16. DMC-Katalysator nach Anspruch 9, **dadurch gekennzeichnet, daß** das funktionalisierte Polymer ein Polyalkylenglykolsorbitanester ist.

17. DMC-Katalysator nach Anspruch 16, **dadurch gekennzeichnet, daß** das funktionalisierte Polymer ein Polyethylenglykolsorbitanmono-, di- und triester von Fettsäuren mit 6 bis 18 C-Atomen und 2 bis 40 Mol Ethylenoxid ist.

18. DMC-Katalysator nach Anspruch 9, **dadurch gekennzeichnet, daß** das funktionalisierte Polymer ein Polyalkylenglykolglycidylether ist.

19. DMC-Katalysator nach Anspruch 18, **dadurch gekennzeichnet, daß** das funktionalisierte Polymer ein Mono- und Diglycidylether von Polypropylenglykol und Polyethylenglykol ist.

20. Verwendung eines oder mehrerer DMC-Katalysatoren nach einem der Ansprüche 1 bis 19, zur Herstellung von Polyetherpolyolen durch Polyaddition von Alkylenoxiden an aktive Wasserstoffatome aufweisende Starterverbindungen.

## Claims

1. Double metal cyanide (DMC) catalyst containing
a) one or more double metal cyanide compounds,
b) one or more organic complex ligands different from c), and
c) one or more functionalised polymers,
**characterised in that** in the X-ray diffraction diagram of the catalyst powder sharp lines occur that are characteristic of highly crystalline double metal cyanide compounds, and that is obtainable by a process comprising the following steps:
i) reaction in aqueous solution of
(α) metal salts with metal cyanide salts,
(β) organic complex ligands that are different from the functionalised polymer, and
(γ) functionalised polymer,
ii) separation, washing and drying of the catalyst obtained in step i).

2. DMC catalyst according to claim 1, containing in addition d) water and/or e) a water-soluble metal salt.

3. DMC catalyst according to claim 1 or 2, wherein the double metal cyanide compound is zinc hexacyanocobaltate (III).

4. DMC catalyst according to one of claims 1 to 3, wherein the organic complex ligand is tert.-butanol.

5. DMC catalyst according to one of claims 1 to 4, wherein the catalyst contains.5 to 80 weight %, preferably 7 to 60 weight %, of a functionalised polymer.

6. DMC catalyst according to one of claims 1 to 5 containing
a) zinc hexacyanocobaltate (III),
b) tert.-butanol, and
c) a functionalised polymer.

7. DMC catalyst according to claim 6, **characterised in that** in the X-ray diffraction diagram lines that are characteristic of zinc hexacyanocobaltate occur at d distances of about 5.05-5.15 Å, 3.55-3.65 Å, 2.50-2.60 Å and 2.25-2.30 Å.

8. DMC catalyst according to claim 6, **characterised in that** in the X-ray diffraction diagram the peak at a d distance of about 5.05-5.15 Å occurs as the most intense signal.

9. DMC catalyst according to one of claims 1 to 8, **characterised in that** the functionalised polymer is selected from the group comprising polyethers, polyesters, polycarbonates, polyalkylene glycol sorbitan esters, polyalkylene glycol glycidyl ethers, polyacrylamide, poly(acrylamide-co-acrylic acid), polyacrylic acid, poly(acrylic acid-co-maleic acid), polyacrylonitrile, polyalkyl acrylates, polyalkyl methacrylates, polyvinyl methyl ether, polyvinyl ethyl ether, polyvinyl acetate, polyvinyl alcohol, poly-N-vinyl pyrrolidone, poly(N-vinylpyrrolidone-co -acrylic acid), polyvinyl methyl ketone, poly(4-vinylphenol), poly(acrylic acid-co-styrene), oxazoline polymers, polyalkylenimines, maleic acid and maleic anhydride copolymers, hydroxyethyl cellulose and polyacetals.

10. DMC catalyst according to claim 9, **characterised in that** the functionalised polymer is a polyether.

11. DMC catalyst according to claim 10, **characterised in that** the polyether is a polyether polyol with a hydroxy functionality of 1 to 3 and a number average molecular weight of between 200 and 5·10⁴.

12. DMC catalyst according to claim 9, **characterised in that** the functionalised polymer is a polycarbonate.

13. DMC catalyst according to claim 12, **characterised in that** the functionalised polymer is an aliphatic polycarbonate diol with a mean molecular weight of 400 to 6000.

14. DMC catalyst according to claim 9, **characterised in that** the functionalised polymer is a polyester.

15. DMC catalyst according to claim 14, **characterised in that** the functionalised polymer is a polyester with a mean molecular weight of 400 to 6000 and a OH number of 28 to 300 mg KOH/g.

16. DMC catalyst according to claim 9, **characterised in that** the functionalised polymer is a polyalkylene glycol sorbitan ester.

17. DMC catalyst according to claim 16, **characterised in that** the functionalised polymer is a polyethylene glycol sorbitan monoester, diester and triester of fatty acids with 6 to 18 C atoms and 2 to 40 moles of ethylene oxide.

18. DMC catalyst according to claim 9, **characterised in that** the functionalised polymer is a polyalkylene glycol glycidyl ether.

19. DMC catalyst according to claim 18, **characterised in that** the functionalised polymer is a monoglycidyl and diglycidyl ether of polypropylene glycol and polyethylene glycol.

20. Use of one or more DMC catalysts according to one of claims 1 to -19 for producing polyether polyols by polyaddition of alkaline oxides to starter compounds containing active hydrogen atoms.

## Revendications

1. Catalyseur de cyanure bimétallique (DMC), contenant :
a) un ou plusieurs composés de cyanure bimétallique;
b) un ou plusieurs ligands complexants organiques différents de c), et
c) un ou plusieurs polymères fonctionnalisés,
**caractérisé en ce que**, dans le diagramme de diffraction des rayons X de la poudre de catalyseur apparaissent des lignes affilées caractéristiques de composés de cyanure bimétallique hautement cristallins, qu'on peut obtenir par un procédé comprenant les étapes suivantes :
i) transformation en solution aqueuse de :
(α) sels métalliques avec des sels de cyanure métallique
(β) ligands complexants organiques qui sont différents du polymère fonctionnalisé, et
(γ) polymère fonctionnalisé,
ii) isolation, lavage et séchage du catalyseur obtenu à l'étape i).

2. Catalyseur DMC selon la revendication 1, contenant en outre d) de l'eau et/ou e) un sel métallique soluble dans l'eau.

3. Catalyseur DMC selon la revendication 1 ou 2, dans lequel le composé de cyanure bimétallique est de l'hexacyanocobaltate(III) de zinc.

4. Catalyseur DMC selon l'une des revendications 1 à 3, dans lequel le ligand complexant organique est du t-butanol.

5. Catalyseur DMC selon l'une des revendications 1 à 4, dans lequel le catalyseur contient de 5 à 80% en poids, de préférence 7 à 60% en poids d'un polymère fonctionnalisé.

6. Catalyseur DMC selon l'une des revendications 1 à 5, contenant :
a) de l'hexacyanocobaltate(III) de zinc,
b) du t-butanol, et
c) un polymère fonctionnalisé.

7. Catalyseur DMC selon la revendication 6, **caractérisé en ce que**, dans le diagramme de diffraction des rayons X, des lignes apparaissent, qui sont caractéristiques d'hexacyanocobaltate de zinc hautement cristallin à des distances d d'environ 5,05-5,15 Å, 3,55-3,65 Å, 2,50-2,60 Å et 2,25-2,30 Å.

8. Catalyseur DMC selon la revendication 6, **caractérisé en ce que** dans le diagramme de diffraction des rayons X le pic apparaît à une distance d d'environ 5,05-5,15 Å comme signal de la plus forte intensité.

9. Catalyseur DMC selon l'une des revendications 1 à 8, **caractérisé en ce que** le polymère fonctionnalisé est sélectionné parmi le groupe des polyéthers, polyesters, polycarbonates, polyalkylène-glycolsorbitanesters, polyalkylèneglycoiglycidyléthers, polyacrylamides, poly(acrylamide-co-acide acrylique), l'acide polyacrylique, le poly(acide acrylique-so-acide maléique), le polyacrylonitrile, les polyalkylacrylates, les polyalkylméthacrylates, les polyvinylméthyléthers, les polyvinyléthyléthers, l'acétate de polyvinyle, l'alcool de polyvinyle, la poly-N-vinylpyrrolidone, le poly(N-vinylpyrrolidone-co-acide acrylique), la polyvinylméthylcétone, le poly(4-vinylphénol), le poly(acide acrylique-co-styrène), les polymères d'oxazoline, les polyalkylénimines, les copolymères d'acide maléique et d'anhydride d'acide maléique, l'hydroxyméthylcellulose et les polyacétals.

10. Catalyseur DMC selon la revendication 9, **caractérisé en ce que** le polymère fonctionnalisé est un polyéther.

11. Catalyseur DMC selon la revendication 10, **caractérisé en ce que** le polyéther est un polyétherpolyol avec une fonctionnalité hydroxylique de 1 à 3 et un poids moléculaire moyen en nombre entre 200 et 5·10⁴.

12. Catalyseur DMC selon la revendication 9, **caractérisé en ce que** le polymère fonctionnalisé est un polycarbonate.

13. Catalyseur DMC selon la revendication 12, **caractérisé en ce que** le polymère fonctionnalisé est un polycarbonatediol aliphatique avec une masse molaire moyenne de 400 à 6 000.

14. Catalyseur DMC selon la revendication 9, **caractérisé en ce que** le polymère fonctionnalisé est un polyester.

15. Catalyseur DMC selon la revendication 14, **caractérisé en ce que** le polymère fonctionnalisé est un polyester avec une masse molaire moyenne de 400 à 6 000 et un indice OH de 28 à 300 mg KOH/g.

16. Catalyseur DMC selon la revendication 9, **caractérisé en ce que** le polymère fonctionnalisé est un polyalkylèneglycolsorbitanester.

17. Catalyseur DMC selon la revendication 16, **caractérisé en ce que** le polymère fonctionnalisé est un polyéthylèneglycolsorbitane mono-, di- et triester d'acides gras avec 6 à 18 atomes de carbone et 2 à 40 moles d'oxyde d'éthylène.

18. Catalyseur DMC selon la revendication 9, **caractérisé en ce que** le polymère fonctionnalisé est un polyalkylèneglycolglycidyléther.

19. Catalyseur DMC selon la revendication 18, **caractérisé en ce que** le polymère fonctionnalisé est un mono- et diglycidyléther de polypropylèneglycol et polyéthylèneglycol.

20. Utilisation d'un ou de plusieurs catalyseurs DMC selon l'une des revendications 1 à 19, pour la fabrication de polyétherpolyols par polyaddition d'oxydes d'alkylène sur des composés d'amorçage présentant des atomes actifs d'hydrogène.
